# FASCICULE DE BREVET EUROPEEN

(11) **EP 4 203 486 B1**
(45) Date de publication et mention de la délivrance du brevet: **05.03.2025**
(21) Numéro de dépôt: 22214454.5
(22) Date de dépôt: 19.12.2022
(51) Int. Cl.: H04N 21/439, H04N 21/81

(54) **BOITIER DECODEUR POUR LA RESTITUTION D'UNE PISTE AUDIO ADDITIONNELLE**
SET-TOP-BOX ZUR WIEDERGABE EINER ZUSÄTZLICHEN AUDIOSPUR
SET-TOP BOX FOR REPRODUCING AN ADDITIONAL AUDIO TRACK

(30) Priorité: 21.12.2021 FR 2114184
(43) Date de publication de la demande: 28.06.2023
(73) Titulaire: Sagemcom Broadband SAS, 92270 Bois-Colombes (FR)
(72) Inventeur: SCHOTT, Vincent, 92500 Rueil Malmaison (FR)
(74) Mandataire: Cabinet Boettcher

(56) Documents cités:
- WO-A1-2016/018787
- US-A1- 2015 063 780
- US-A1- 2017 201 788
- US-A1- 2021 306 699

## Description

L'invention concerne le domaine de la restitution audio via un boitier décodeur.

### ARRIERE PLAN DE L'INVENTION

Les boitiers décodeurs audio-vidéo (en anglais, *Set-Top Box*) permettent classiquement de transmettre un flux audio-vidéo, produit par une source, à un ou plusieurs équipements de restitution audio-vidéo, tel qu'une télévision. La source peut être de type télédiffusion (en anglais, *broadcasting,* comme par exemple le satellite, la TNT ou encore le câble) ou encore de type OTT (en anglais, *Over The Top*, comme par exemple un serveur connecté à Internet).

Une source de type télédiffusion est régie par la norme DVB (en anglais, *Digital Video Broadcasting*) pour laquelle les flux audio-vidéo sont divisés en paquets, chaque paquet possédant un identifiant PID (en anglais, *Packet Identifier*)*.* Une source de type OTT est régie par des technologies dites d'« adaptative streaming », telles que DASH ou encore HLS (en anglais, *HTTP Live Streaming*), dans lesquelles les flux audio-vidéo sont adressés avec une URL (en anglais, *Uniform Resource Locator*) dans un fichier « manifest ».

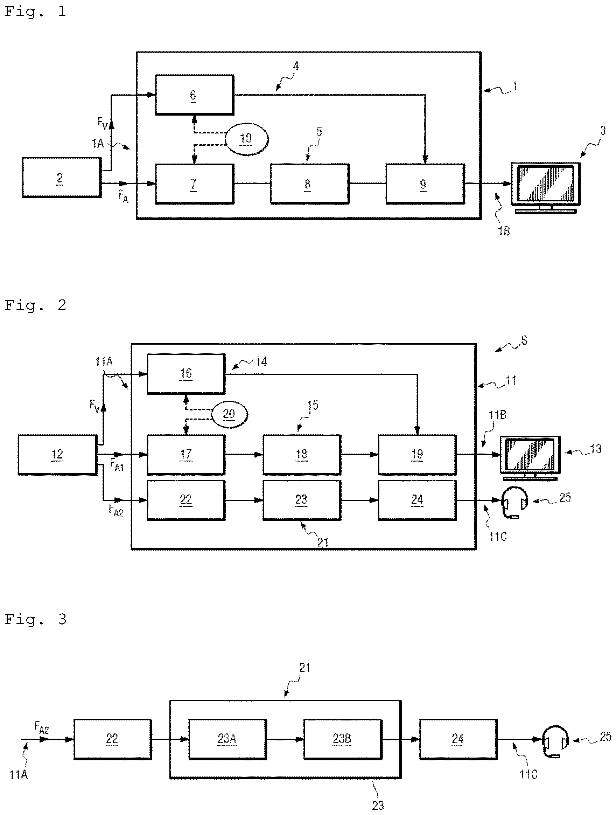

En référence à la figure 1, un boitier décodeur audio-vidéo 1 comporte classiquement une entrée 1A connectée à une source 2 et une sortie audio-vidéo 1B connectée à un équipement de restitution audio-vidéo 3, qui est ici une télévision. La source 2 produit un flux audio-vidéo comprenant un flux vidéo entrant (F_{V}) et un flux audio entrant (F_{A}).

Le boitier décodeur 1 comporte en outre une chaine de traitement vidéo 4, recevant le flux vidéo entrant sur l'entrée 1A du boitier décodeur 1, et une chaine de traitement audio 5, recevant le flux audio entrant sur ladite entrée 1A du boitier décodeur 1.

La chaine de traitement vidéo 4 comprend un module de décodage 6. La chaine de traitement audio 5 comprend un module de décodage 7, un module de mise en forme 8 et un module de pilotage 9. Le module de pilotage 9 est ici commun à la chaine de traitement vidéo 4 et à la chaine de traitement audio 5. Le flux vidéo entrant et le flux audio entrant sont donc chacun traités par des chaines de traitement distinctes.

Le boitier décodeur 1 comporte en outre une horloge 10 connectée au module de décodage 6 et au module de décodage 7.

Le module de décodage 7 permettent de convertir le flux audio entrant dans un format brut comme par exemple un format PCM (en anglais, *Pulse-Code Modulation*). L'horloge 10 permet alors de réaliser une première synchronisation entre le flux vidéo et le flux audio.

Le module de mise en forme 8 permet ensuite d'adapter le flux audio entrant (au format brut) via des procédés de mixage et/ou d'encodage.

Enfin, le module de pilotage 9 fournit un flux vidéo sortant et un flux audio sortant à la télévision 3 via la sortie audio-vidéo 1B. Le module de pilotage 9 permet ainsi d'adapter l'image et le son à la sortie physique. Le module de pilotage 9 comporte par exemple un pilote HDMI (en anglais, *High-Definition Multimedia Interface*) - auquel cas la sortie audio-vidéo 1B est un port HDMI.

Le flux audio sortant est alors restitué par des haut-parleurs internes et/ou externes à la télévision 3.

Pour un flux audio-vidéo d'un programme donné (en cours de visionnage), le flux audio peut comporter une pluralité de pistes audio associées à un même flux vidéo. Par exemple, chaque piste audio peut correspondre à une langue du programme. Le flux audio peut également comporter une piste audio principale intégrant un contenu audio principal, c'est-à-dire un contenu audio original du programme, et une piste audio additionnelle intégrant un contenu d'audiodescription. Le contenu d'audiodescription permet d'avoir une description orale du contenu vidéo du programme. Le contenu d'audiodescription est notamment ciblé pour les personnes à déficiences visuelles.

Il est connu des boitiers décodeur permettant de choisir, via une interface utilisateur, de restituer soit la piste audio principale, soit la piste audio additionnelle (sur des haut-parleurs internes et/ou externes à la télévision 2).

Les documents US 2021/306699 A1, US 2017/201788 A1 et US 2015/063780 A1 proposent des solutions comprenant une chaîne de traitement audio permettant de produire deux flux audio différents en sortie d'un équipement électronique.

L'inconvénient majeur est donc que si un spectateur (par exemple ayant une déficience visuelle) visionne un programme avec le contenu d'audiodescription, un spectateur sans déficience visuelle ne peut pas visionner le programme avec seulement le contenu audio original.

### OBJET DE L'INVENTION

Un but de l'invention est donc de proposer un boitier décodeur permettant de résoudre le problème posé ci-dessus.

### RESUME DE L'INVENTION

En vue de la réalisation de cet objet, on propose un boitier décodeur comportant :
- une entrée agencée pour être connectée à une source produisant un flux audio-vidéo comprenant un flux audio entrant et un flux vidéo entrant, le flux audio entrant comportant une piste audio principale entrante qui est destinée à être restituée pour former un son ambiant et une piste audio additionnelle entrante, distincte de la piste audio principale entrante, qui comprend des commentaires relatifs au flux vidéo entrant, et qui est destinée à être restituée à un unique utilisateur via des écouteurs ;
- une sortie vidéo agencée pour être connectée à un équipement de restitution vidéo, une première sortie audio agencée pour être connectée à un module de restitution audio comprenant au moins un haut-parleur, et une deuxième sortie audio, distincte de la sortie vidéo et de la première sortie audio, et agencée pour être connectée aux écouteurs ;
- une chaîne de traitement vidéo agencée pour produire, à partir du flux vidéo entrant, un flux vidéo sortant, et pour transmettre le flux vidéo sortant à l'équipement de restitution vidéo via la sortie vidéo ;
- une chaîne de traitement audio principale agencée pour produire, à partir de la piste audio principale entrante, une piste audio principale sortante synchronisée avec le flux vidéo sortant, et pour transmettre la piste audio principale sortante au module de restitution audio via la première sortie audio ;
- une chaîne de traitement audio additionnelle agencée pour produire, à partir de la piste audio additionnelle entrante, une piste audio additionnelle sortante synchronisée avec le flux vidéo sortant, et pour transmettre la piste audio additionnelle sortante aux écouteurs via la deuxième sortie audio.

Le boitier décodeur selon l'invention est donc particulièrement avantageux car il comporte une chaine de traitement audio additionnelle, distincte de la chaine de traitement vidéo et de la chaine de traitement audio principale, pour transmettre la piste audio additionnelle sortante à des écouteurs (qui sont distincts du module de restitution audio). Un spectateur sans déficience visuelle peut donc visionner un programme sur l'équipement de restitution vidéo en écoutant la piste audio principale sortante restituée par le module de restitution audio. En même temps, un spectateur ayant une déficience visuelle peut visionner le même programme sur l'équipement de restitution vidéo en écoutant la piste audio additionnelle restituée uniquement pour lui dans les écouteurs.

En outre, le boitier décodeur selon l'invention assure que le flux vidéo sortant, la piste audio principale sortante et la piste audio additionnelle sortante sont synchronisés.

Le boitier décodeur selon l'invention permet ainsi à un spectateur sans déficience visuelle et à un spectateur ayant une déficience visuelle de visionner le même programme de manière synchronisée sans se déranger mutuellement.

Selon un mode particulier, le module de restitution audio est intégré dans le boitier décodeur.

Optionnellement, le module de restitution audio est intégré dans une enceinte audio distincte du boitier décodeur.

La piste audio additionnelle entrante intègre un contenu audio additionnel qui est un contenu d'audiodescription associé à un contenu audio principal intégré dans la piste audio principale.

Optionnellement, la deuxième sortie audio est une sortie Bluetooth (marque déposée).

Selon un mode particulier, la piste audio principale entrante intègre un contenu audio principal et la piste audio additionnelle entrante intègre le contenu audio principal et un contenu audio additionnel, la chaine de traitement audio additionnelle comporte alors un module d'extraction recevant la piste audio principale entrante et la piste audio additionnelle entrante, et étant agencé pour soustraire ladite piste audio principale entrante à ladite piste audio additionnelle entrante de telle sorte que la piste audio additionnelle sortante intègre uniquement le contenu audio additionnel.

Optionnellement, le module d'extraction met en œuvre un algorithme de traitement du signal utilisant un calcul de corrélation croisée entre la piste audio principale entrante et la piste audio additionnelle entrante pour synchroniser ladite piste audio principale entrante et ladite piste audio additionnelle entrante.

Avantageusement, la piste audio principale entrante et la piste audio additionnelle entrante intègrent en outre chacune une information d'horodatage, le module d'extraction utilise alors l'information d'horodatage pour synchroniser ladite piste audio principale entrante et ladite piste audio additionnelle entrante.

Selon un mode particulier, le flux audio entrant comporte uniquement une piste audio commune entrante, la piste audio commune entrante intègre un contenu audio principal qui est un premier canal du flux audio entrant, et un contenu audio additionnel qui est un deuxième canal du flux audio entrant, le boitier décodeur comprend alors un module de sélection, positionné en amont de la chaine de traitement audio principale et de la chaine de traitement audio additionnelle, et agencé pour séparer le premier canal et le deuxième canal, la piste audio principale sortante intègre alors le premier canal et la piste audio additionnelle sortante intègre alors le deuxième canal.

De préférence, le module de sélection reçoit une métadonnée pour identifier le premier canal et le deuxième canal du flux audio entrant.

Selon un mode particulier, le flux audio entrant est un flux audio stéréo.

La piste audio principale entrante et la piste audio additionnelle entrante sont alors chacune une piste audio mono. Le contenu audio principal est le premier canal qui est le canal « gauche » et le contenu audio additionnelle est le deuxième canal qui est le canal « droite » du flux audio entrant stéréo.

Selon un mode particulier, la piste audio principale entrante intègre un contenu audio principal et la piste audio additionnelle entrante intègre le contenu audio principal et un contenu audio additionnel, la chaine de traitement audio additionnelle est alors agencée pour que la piste audio additionnelle sortante intègre le contenu audio principal et le contenu audio additionnel.

Selon un mode particulier, le flux audio entrant comporte uniquement une piste audio commune entrante, la piste audio commune entrante intègre un contenu audio principal qui est un premier canal du flux audio entrant, et un contenu audio additionnel qui est un deuxième canal du flux audio entrant, le boitier décodeur comprend alors un module de sélection, positionné en amont de la chaine de traitement audio principale et de la chaine de traitement audio additionnelle, et agencé pour séparer le premier canal du deuxième canal, la chaine de traitement audio additionnelle comporte en outre un module de mixage, recevant le premier canal et le deuxième canal, et étant agencé pour mixer ledit premier canal et ledit deuxième canal de telle sorte que la piste audio additionnelle sortante intègre le premier canal et le deuxième canal.

Selon un mode particulier, la piste audio principale entrante intègre un contenu audio principal et la piste audio additionnelle entrante intègre un contenu audio additionnel, la chaine de traitement audio additionnelle comporte alors en outre un module de mixage, recevant ladite piste audio principale entrante et ladite piste audio additionnelle entrante, et étant agencé pour mixer ladite piste audio principale entrante et ladite piste audio additionnelle entrante de telle sorte que la piste audio additionnelle sortante intègre le contenu audio additionnel et le contenu audio principal.

Avantageusement, le boitier décodeur comporte en outre une interface utilisateur agencée pour permettre à un utilisateur de définir un contenu audio intégré dans la piste audio additionnelle entrante.

De préférence, le boitier décodeur est agencé pour compenser un retard introduit par un lien de communication reliant la deuxième sortie audio et les écouteurs.

Selon un mode particulier, le boitier décodeur comporte une pluralité de deuxièmes sorties audio agencées chacune pour être connectées à des écouteurs distincts, le retard étant alors déterminé sur la base du lien de communication le plus lent.

L'invention concerne également un système multimédia comprenant un boitier décodeur tel que précédemment décrit, ainsi que l'équipement de restitution vidéo, le module de restitution audio et les écouteurs.

D'autres caractéristiques et avantages de l'invention ressortiront à la lecture de la description qui suit de modes de réalisation particuliers non limitatifs de l'invention.

### BREVE DESCRIPTION DES DESSINS

La description de l'invention fait référence aux dessins annexés, parmi lesquels :
[Fig. 1] la figure 1 représente un schéma fonctionnel d'un boitier décodeur de l'art antérieur.
[Fig. 2] la figure 2 représente un schéma fonctionnel d'un boitier décodeur selon un premier mode de réalisation particulier de l'invention.
[Fig. 3] la figure 3 représente un schéma fonctionnel de la chaine de traitement additionnelle d'un boitier décodeur selon l'invention.
[Fig. 4] la figure 4 représente un schéma fonctionnel d'un boitier décodeur selon un deuxième mode de réalisation particulier de l'invention.
[Fig. 5] la figure 5 représente un schéma fonctionnel d'un boitier décodeur selon un troisième mode de réalisation particulier de l'invention.
[Fig. 6] la figure 6 représente un schéma fonctionnel d'un boitier décodeur selon un quatrième mode de réalisation particulier de l'invention.
[Fig. 7] la figure 7 représente un schéma fonctionnel d'un boitier décodeur selon un cinquième mode de réalisation particulier de l'invention.
[Fig. 8] la figure 8 représente un schéma fonctionnel d'un boitier décodeur selon un sixième mode de réalisation particulier de l'invention.

### DESCRIPTION DETAILLEE DE L'INVENTION

Il est entendu ici qu'un canal audio est un élément appartenant à un flux audio multicanal. Par exemple, un flux audio stéréo ou encore 5.1 est un flux audio multicanal. En revanche, une piste audio est un élément qui comprend un ou plusieurs contenus audio quelconques, chaque contenu pouvant être un unique canal d'un flux audio multicanal.

En référence aux figures 2 et 3, il est décrit un boitier décodeur 11 selon l'invention. Le boitier décodeur 11 comporte une entrée 11A. Le boîtier décodeur 11 comporte de plus une sortie vidéo, une première sortie audio et une deuxième sortie audio.

L'entrée 11A du boitier décodeur 11 est connectée à une source 12.

La sortie vidéo du boitier décodeur 11 est connectée à un équipement de restitution vidéo qui est en l'occurrence une télévision 13.

La première sortie audio du boitier décodeur 11 est connectée à un module de restitution audio comprenant au moins un haut-parleur. Le module de restitution audio est ici intégré dans la télévision 13.

Plus précisément, la sortie vidéo et la première sortie audio sont en fait intégrées dans un même port pour former une sortie audio-vidéo 11B. La sortie audio-vidéo 11B est ici un port HDMI (en anglais, *High-Definition Multimedia Interface).*

Si la sortie vidéo et la première sortie audio sont distinctes (non intégrées dans le même port), ladite sortie vidéo peut être connectée à la télévision 13 et ladite première sortie audio pourrait être connectée à un module de restitution audio intégré dans une enceinte audio distincte de la télévision 13. La première sortie audio pourrait ainsi être une sortie S/PDIF ou HDMI. En outre, toujours si la sortie vidéo et la première sortie audio sont distinctes, la première sortie audio pourrait être connectée à un module de restitution audio intégré dans le boitier décodeur (dans le cas d'une VSB, en anglais, *Video Sound Box*).

La deuxième sortie audio 11C du boitier décodeur 11 est connectée à des écouteurs qui sont ici intégrés dans un casque audio 25. Le casque audio 25 est destiné à faire de la restitution audio pour un unique utilisateur. Le casque audio 25 est ici un casque audio *Bluetooth* (marque déposée). La deuxième sortie audio 11C est donc une sortie *Bluetooth* (marque déposée).

Le boitier décodeur 11, la source 12, la télévision 13, le module de restitution audio (intégré dans la télévision 13) et le casque audio 25 (comprenant les écouteurs) forment un système multimédia S.

La source 12 produit un flux audio-vidéo comprenant un flux audio entrant (F_{A}) et un flux vidéo entrant (F_{V}). En outre, le flux audio entrant comporte une piste audio principale entrante (F_{A1}) et une piste audio additionnelle entrante (F_{A2}).

La piste audio principale entrante est destinée à être restituée pour former un son ambiant. Le son ambiant correspond à un son de fond ou environnant, présent dans l'environnement du module de restitution audio et destiné à être entendu par toute personne présente dans ledit environnement, par opposition à un son qui est écouté via des écouteurs (par une unique personne). La piste audio principale est donc destinée à être restituée simultanément à plusieurs utilisateurs sans que lesdits utilisateurs ne possèdent chacun des écouteurs personnels. La piste audio principale entrante intègre un contenu audio principal qui est ici un contenu original d'un programme télédiffusé en cours de visionnage sur la télévision 13.

La piste audio additionnelle entrante est distincte de la piste audio principale et comprend des commentaires relatifs au flux vidéo entrant. La piste audio additionnelle entrante, contrairement à la piste audio principale, est destinée à être restituée à un unique utilisateur via des écouteurs (les écouteurs intégrés dans le casque audio 25). La piste audio additionnelle entrante intègre au moins un contenu audio additionnel qui est un contenu d'audiodescription, correspondant donc à des commentaires destinés à décrire le flux vidéo entrant.

La source 12 peut produire une ou plusieurs pistes audio additionnelles, en plus d'une piste audio principale selon plusieurs configurations.

Pour une source de type télédiffusion (en anglais, *broadcasting*), la norme DVB (en anglais, *Digital Video Broadcasting*) prévoit que la PMT (en anglais, *Program Map* Table) comporte un identifiant PID (en anglais, *Packet Identifier*) de la piste audio principale entrante et un identifiant PID de la piste audio additionnelle entrante. Pour une source de type OTT, par exemple selon la technologie DASH, la piste audio principale entrante et la piste audio additionnelle entrante sont déclarées dans un fichier « manifest ». Quel que soit le type de la source, le flux audio entrant comprend alors la piste audio principale entrante, qui intègre le contenu audio principal, ainsi que la piste audio additionnelle entrante, qui intègre le contenu audio additionnel.

En outre, une source de type télédiffusion ou OTT peut également produire un flux audio entrant comprenant la piste audio principale entrante, intégrant le contenu audio principal, ainsi que la piste additionnelle entrante, intégrant le contenu audio principal et le contenu audio additionnel. La piste audio additionnelle entrante est ainsi une piste audio pré-mixée.

Enfin, une source de type télédiffusion ou OTT peut produire un flux audio entrant utilisant un format multicanal (par exemple stéréo). Dans ce cas, le flux audio entrant comporte une seule piste audio qui est une piste audio commune intégrant le contenu audio principal qui est un premier canal dudit flux audio entrant, le contenu audio additionnel qui est un deuxième canal du flux audio entrant.

Le boitier décodeur 11 comporte une chaine de traitement vidéo 14 (similaire à la chaine de traitement vidéo 4 du boitier décodeur 1 visible sur la figure 1), une chaine de traitement audio principale 15 (similaire à la chaine de traitement audio 5 du boitier décodeur 1) et une chaine de traitement audio additionnelle 21. Les chaines de traitement 14, 15, 21 sont implémentées par un ou plusieurs composants de traitement intégrés dans le boitier décodeur 11. Le ou les composants de traitement peuvent être un DSP (en anglais, *Digital Signal Processor*), un processeur, un microcontrôleur, un FPGA (en anglais, *Field Programmable Gate Array*) ou encore un ASIC (en anglais, *Application-Specific Integrated Circuit*). Le boitier décodeur comporte au moins une mémoire reliée au ou aux composants de traitement. La mémoire forme un support d'enregistrement lisible par ordinateur, sur lequel sont enregistrés des programmes d'ordinateur comprenant des instructions.

La chaine de traitement vidéo 14 reçoit le flux vidéo entrant (F_{V}) via l'entrée 11A du boitier décodeur 11.

La chaine de traitement audio principale 15 reçoit la piste audio principale entrante (F_{A1}) du flux audio entrant via l'entrée 11A du boitier décodeur 11.

La chaine de traitement audio additionnelle 21 reçoit la piste audio additionnelle entrante (F_{A2}) du flux audio entrant via l'entrée 11A du boitier décodeur 11.

Il est supposé qu'un spectateur sans déficience visuelle visionne le programme télédiffusé sur la télévision 13 avec la piste audio principale (le contenu audio original) restituée par le ou les haut-parleurs du module de restitution audio intégré à la télévision 13, et qu'un spectateur ayant une déficience visuelle visionne le programme télédiffusé sur la télévision 13 avec la piste audio additionnelle (le contenu d'audiodescription) restituée par les écouteurs du casque audio 25. Sachant que le casque audio 25 n'empêche pas le spectateur ayant une déficience visuelle d'entendre la piste audio principale, ledit spectateur écoute simultanément la piste audio principale et la piste audio additionnelle, c'est-à-dire le contenu audio original et le contenu d'audiodescription.

Selon un premier mode de réalisation, la piste audio additionnelle entrante intègre uniquement le contenu audio additionnel qui est le contenu d'audiodescription associé au flux vidéo entrant.

La chaine de traitement vidéo 14 comprend un module de décodage 16. La chaine de traitement audio principale 15 comprend successivement un module de décodage 17, un module de mise en forme 18 et un module de pilotage 19. Le module de pilotage 19 est ici commun à la chaine de traitement vidéo 14 et à la chaine de traitement audio principale 15 car la sortie vidéo et la première sortie audio sont intégrées dans un même port pour former la sortie audio-vidéo 11B.

Le boitier décodeur 11 comporte en outre une horloge 20 connectée au module de décodage 16 et au module de décodage 17. L'horloge 20 peut être générée à partir de données supplémentaires intégrées dans le flux audio-vidéo, mais différentes du flux audio et du flux vidéo ; ou bien encore directement générée à partir des données intégrées dans le flux audio et/ou le flux vidéo. L'horloge 20 permet d'effectuer une première synchronisation entre le flux vidéo entrant et la piste audio principale entrante.

Le module de décodage 16 et le module de décodage 17 permettent de convertir respectivement le flux vidéo entrant et la piste audio principale entrante dans un format brut comme par exemple un format PCM (en anglais, *Pulse-Code Modulation) .*

Le module de mise en forme 18 permet ensuite d'adapter la piste audio principale entrante, via par exemple des procédés de mixage et d'encodage, à la sortie audio-vidéo 11B.

Le module de pilotage 19 fournit un flux vidéo sortant et une piste audio principale sortante à la télévision 13 via la sortie audio-vidéo 11B. Le module de pilotage 19 peut également effectuer une synchronisation plus fine entre le flux vidéo sortant et la piste audio principale sortante. Le module de pilotage 19 permet ainsi d'adapter l'image et le son à la sortie physique. Le module de pilotage 19 comporte par exemple un pilote HDMI.

La chaîne de traitement vidéo 14 est ainsi agencée pour produire, à partir du flux vidéo entrant (F_{V}), le flux vidéo sortant, et pour transmettre ledit flux vidéo sortant à la télévision 13 via la sortie audio-vidéo 11B.

La chaîne de traitement audio principale 15 est ainsi agencée pour produire, à partir de la piste audio principale entrante (F_{A1}), la piste audio principale sortante synchronisée avec le flux vidéo sortant, et pour transmettre ladite piste audio principale sortante au module de restitution audio intégré à la télévision 13 via la sortie audio-vidéo 11B.

On rappelle que le module de restitution audio n'est pas forcément intégré dans la télévision 13 mais pourrait être directement intégré dans le boitier décodeur 11 (dans le cas d'une VSB). La piste audio principale sortante pourrait ainsi être transmise via la première sortie audio pour être restituée par le ou les haut-parleurs du module de restitution audio intégré dans le boitier décodeur 11. En outre, on rappelle également que le module de restitution audio pourrait également être intégré dans une enceinte audio distincte de la télévision 13. La piste audio principale sortante pourrait ainsi être transmise via la première sortie audio pour être restituée par le ou les haut-parleurs du module de restitution audio intégré dans l'enceinte audio.

La chaine de traitement audio additionnelle 21 comporte successivement un module de décodage 22, un module de mise en forme 23 et un module de pilotage 24.

Le module de décodage 22 permet de convertir la piste audio additionnelle entrante dans un format brut comme par exemple un format PCM. Il est à noter que sur la figure 2 l'horloge 20 n'est pas connectée au module de décodage 22, mais cela pourrait être le cas.

Le module de mise en forme 23 permet ensuite d'adapter la piste audio additionnelle entrante à la deuxième sortie audio 11C qui est ici une sortie *Bluetooth* (marque déposée). Le module de mise en forme 23 comporte ainsi une unité d'encodage 23B.

Optionnellement, le module de mise en forme 23 comporte une unité de mixage réducteur 23A (en anglais, *downmixing*). Par exemple, si la piste audio additionnelle entrante est une piste audio au format multicanale comportant six canaux, l'unité de mixage réducteur 23A permet de convertir la piste audio additionnelle entrante au format multicanal stéréo (c'est-à-dire à deux canaux).

Le module de pilotage 24 fournit une piste audio additionnelle sortante au casque audio 25 via la deuxième sortie audio 11C. Le module de pilotage 24 peut également effectuer une synchronisation entre le flux vidéo sortant et la piste audio additionnelle sortante. Le module de pilotage 24 comporte ici un pilote *Bluetooth* (marque déposée).

La chaîne de traitement audio additionnelle 21 est ainsi agencée pour produire, à partir de la piste audio additionnelle entrante (F_{A2}), la piste audio additionnelle sortante synchronisée avec le flux vidéo sortant, et pour transmettre ladite piste audio additionnelle sortante au casque audio 25 via la deuxième sortie audio 11C.

Optionnellement, l'unité de mixage réducteur 23A peut convertir la piste audio additionnelle entrante au format mono. Ainsi, si le casque 25 comporte deux oreillettes restituant chacune la piste audio additionnelle sortante (au format mono), un spectateur peut choisir d'écouter la piste audio additionnelle sortante via une seule oreillette (disposée sur son oreille). Le spectateur peut alors écouter la piste audio principale sortante (restituée par des haut-parleurs internes et/ou externes à la télévision 13) avec son autre oreille. Cette option pourrait être configurable, par le spectateur, via une interface utilisateur située sur le boitier décodeur 11.

Il est à noter ici que la présence du module de décodage 17 et du module de décodage 22 est optionnelle étant donné que ni la chaine de traitement audio principale 15, ni la chaine de traitement audio additionnelle 21 ne mettent en œuvre d'algorithme de traitement de signal.

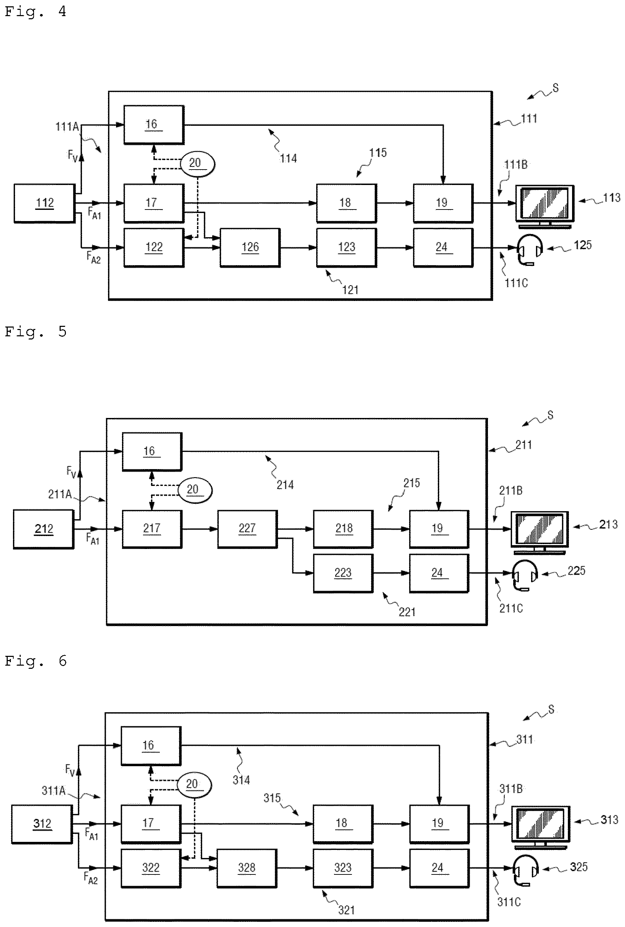

En référence à la figure 4, un boitier décodeur 111 selon un deuxième mode de réalisation de l'invention est décrit.

La source 112 produit le flux audio entrant comprenant la piste audio principale entrante (F_{A1}) et la piste audio additionnelle entrante (F_{A2}). La piste audio principale entrante intègre le contenu audio principal et la piste audio additionnelle entrante intègre le contenu audio principal et le contenu audio additionnel. La piste audio additionnelle intègre donc le contenu original ainsi que le contenu d'audiodescription du programme en cours de visionnage.

Le boitier décodeur 111 comporte une chaine de traitement audio additionnelle 121. Le boitier décodeur 111 diffère du boitier décodeur 11 en ce que la chaine de traitement audio additionnelle 121 comporte un module d'extraction 126 positionné en aval du bloc de décodage 122 et en amont du bloc de mise en forme 123. Ici, par « en amont », on entend du côté de la source ; et par « en aval », on entend du côté des équipements de restitution.

Le module d'extraction 126 reçoit la piste audio principale entrante et la piste audio additionnelle entrante (au format brut) et est agencé pour soustraire ladite piste audio principale entrante à ladite piste audio additionnelle entrante. Le module d'extraction 126 assure ainsi que la piste audio additionnelle sortante intègre uniquement le contenu audio additionnel.

Les écouteurs du casque audio 125 restitue donc uniquement le contenu audio additionnel (c'est-à-dire uniquement le contenu d'audiodescription).

Le module d'extraction 126 met par exemple en œuvre un algorithme de traitement de signal utilisant un calcul de corrélation croisée entre la piste audio principale entrante et la piste audio additionnelle entrante. Ainsi, le module d'extraction 126 permet de synchroniser ladite piste audio principale entrante et ladite piste audio additionnelle entrante pour l'opération de soustraction.

La piste audio principale entrante et la piste audio additionnelle entrante pourrait en outre chacune intégrer une information d'horodatage (par exemple, un champ *timestamp*). Dans ce cas, le module d'extraction 126 peut utiliser l'information d'horodatage pour synchroniser ladite piste audio principale entrante et ladite piste audio additionnelle entrante. Le module d'extraction 126 ne nécessite ainsi pas de mettre en œuvre un algorithme de corrélation croisée.

En référence à la figure 5, un boitier décodeur 211 selon un troisième mode de réalisation de l'invention est décrit.

La source 212 produit le flux audio entrant (F_{A}) au format multicanal, ici au format stéréo. Le flux audio entrant comporte uniquement une piste audio commune entrante, la piste audio commune entrante intègre un contenu audio principal qui est un premier canal du flux audio entrant, et un contenu audio additionnel qui est un deuxième canal du flux audio entrant. Le contenu audio original et le contenu d'audiodescription associé sont donc chacun un canal particulier du flux audio entrant.

Le boitier décodeur 211 diffère du boitier décodeur 11 en ce qu'il comprend un module de sélection 227, positionné en amont de la chaine de traitement audio principale 215 et de la chaine de traitement audio additionnelle 221. De plus, le boitier décodeur 211 comprend également un unique module de décodage 217 (qui peut être similaire au module de décodage 17) positionné en aval du module de sélection 227.

Le module de sélection 227 reçoit le flux audio entrant (au format brut) et est agencé pour séparer le premier canal et le deuxième canal. Ainsi, la piste audio principale entrante intègre le premier canal (le contenu audio principale) et la piste audio additionnelle entrante intègre le deuxième canal (le contenu audio additionnel). La piste audio principale entrante et la piste audio additionnelle entrante sont donc issues de la piste audio commune entrante.

En outre, la piste audio principale sortante intègre alors le premier canal et la piste audio additionnelle sortante intègre alors le deuxième canal.

Les écouteurs du casque audio 225 restitue donc uniquement le contenu audio additionnel (c'est-à-dire le contenu d'audiodescription).

Sachant que le flux audio entrant est au format stéréo, la piste audio principale entrante (reçue sur le module de mise en forme 218 de la chaine de traitement audio principale 215) est alors au format mono. Pour la même raison, la piste audio additionnelle entrante (reçue sur le module de mise en forme 223 de la chaine de traitement audio additionnelle 221) est au format mono.

Optionnellement, le module de mise en forme 218 et le module de mise en forme 223 comporte chacun une unité de mixage amplificateur (en anglais, *upmixing*). La piste audio principale entrante (ici au format mono) et la piste audio additionnelle entrante (également au format mono) pourraient être alors chacune converties au format stéréo (via les modules de mise en forme 218, 223). La piste audio principale sortante et la piste audio additionnelle sortante sont ainsi chacune au format stéréo

De préférence, le module de sélection 227 reçoit une métadonnée pour identifier le ou les canaux associés au contenu audio original et le ou les canaux associés au contenu d'audiodescription). La métadonnée peut être transmise via la PMT si la source 212 est une source de type télédiffusion ou dans le fichier « manifest » si la source 212 est une source de type OTT (selon la technologie DASH). La métadonnée pourrait également être définie par convention entre la source 212 et le boitier décodeur 211.

Bien évidemment, le troisième mode de réalisation décrit ici est applicable quel que soit le format multicanal du flux audio entrant. Le flux audio entrant pourrait par exemple être au format 5.1, ou supérieur. La piste audio principale entrante et la piste audio additionnelle entrante pourraient être alors chacune au format stéréo.

Le flux audio entrant peut être un flux audio multicanal en double stéréo. En outre, la piste audio principale peut être en mono et la piste audio additionnelle peut être en stéréo (et inversement). Dans ce cas, le module d'adaptation se chargera d'ajuster le format de la piste audio considérée à l'équipement correspondant.

Pour les trois modes de réalisation qui viennent d'être présentés, il a été question de séparer le contenu audio principal (contenu audio original d'un programme télédiffusé) du contenu d'audiodescription (relatif au flux vidéo entrant). En séparant ces deux contenus, il est évité que le spectateur ayant une déficience visuelle entende le contenu audio principal à la fois via le ou les haut-parleurs du module de restitution audio intégrés (ou non) dans la télévision et via les écouteurs du casque audio. Cependant, il est tout à fait possible de transmettre à la fois le contenu audio original et le contenu d'audiodescription au casque audio. Cela est particulièrement avantageux si le casque audio est un équipement à réduction de bruit active. En effet, dans ce cas, le spectateur ayant une déficience visuelle n'est pas en mesure d'entendre le contenu audio original restitué par le ou les haut-parleurs du module de restitution audio.

En référence à la figure 6, un boitier décodeur 311 selon un quatrième mode de réalisation de l'invention est décrit. Il s'agit d'une configuration du flux audio entrant similaire au premier mode de réalisation.

La piste audio principale entrante (F_{A1}) intègre le contenu audio principal et la piste audio additionnelle entrante (F_{A2}) intègre le contenu audio additionnel.

Le boitier décodeur 311 comporte une chaine de traitement audio additionnelle 321. Le boitier décodeur 311 diffère du boitier décodeur 11 en ce que la chaine de traitement 321 comporte un module de mixage 328 positionné en aval du bloc de décodage 322 et en amont du bloc de mise en forme 323.

Le module de mixage 328 reçoit la piste audio principale entrante et la piste audio additionnelle entrante (au format brut) et est agencé pour mixer ladite piste audio principale entrante et ladite piste audio additionnelle entrante. Le module de mixage 328 assure ainsi que la piste audio additionnelle sortante intègre le contenu audio additionnel et le contenu audio principal.

Les écouteurs du casque audio 325 restitue donc le contenu audio principal et le contenu audio additionnel.

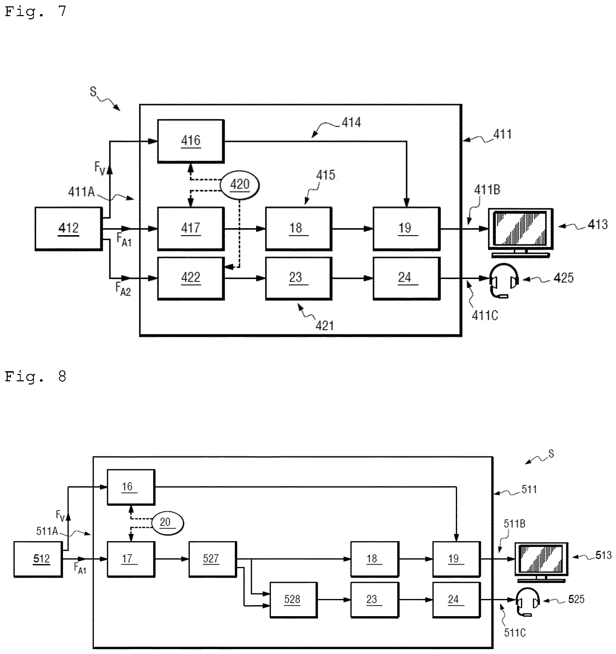

En référence à la figure 7, un boitier décodeur 411 selon un cinquième mode de réalisation de l'invention est décrit. Il s'agit d'une configuration du flux audio entrant similaire au deuxième mode de réalisation.

La piste audio principale entrante intègre le contenu audio principal et la piste audio additionnelle entrante intègre le contenu audio principal et le contenu audio additionnel.

Le boitier décodeur 411 diffère du boitier décodeur 11 en ce que l'horloge 420 est connectée au module de décodage 422 de la chaine de traitement audio additionnelle 421 (et également au module de décodage 416 et au module de décodage 417).

Dans ce cas, la chaîne de traitement audio additionnelle 421 produit directement la piste audio additionnelle sortante, à partir de la piste audio additionnelle entrante, et transmet ladite piste audio additionnelle sortante au casque audio 425 via la deuxième sortie audio 411C.

Il est à noter que ni la chaîne de traitement audio principale 415, ni la chaine de traitement audio additionnelle 421 ne mettent en œuvre d'algorithme de traitement de signal. Le module de décodage 417 et le module de décodage 422 sont donc optionnels.

En référence à la figure 8, un boitier décodeur 511 selon un sixième mode de réalisation de l'invention est décrit. Il s'agit d'une configuration du flux audio entrant similaire au troisième mode de réalisation.

Le flux audio entrant comporte uniquement une piste audio commune entrante, la piste audio commune entrante intègre un contenu audio principal qui est un premier canal du flux audio entrant, et un contenu audio additionnel qui est un deuxième canal du flux audio.

Le boitier décodeur 511 diffère du boitier décodeur 11 en ce qu'il comprend un module de sélection 527 (qui peut être similaire au module de sélection 227 du boitier décodeur 211). De plus, la chaine de traitement audio additionnelle 521 comporte en outre un module de mixage 528 (qui peut être similaire au module de mixage 328 du boitier décodeur 311). Le module de mixage 528 est positionné en amont direct du module de sélection 227.

Le module de sélection 527 est agencé pour séparer le premier canal et le deuxième canal. Le module de mixage 528 reçoit alors le premier canal et le deuxième canal et est agencé pour mixer ledit premier canal et ledit deuxième canal.

La piste audio additionnelle sortante intègre ainsi le contenu audio principal (le premier canal) et le contenu audio additionnel (le deuxième canal). Les écouteurs du casque audio 525 restitue donc le contenu audio principal et le contenu audio additionnel.

De la même manière que pour le troisième mode de réalisation, il est prévu que le module de sélection 527 reçoive une métadonnée pour identifier le ou les canaux associés au contenu audio principale et le ou les canaux associés au contenu audio additionnelle.

Il est prévu que le boitier décodeur selon l'invention comporte en outre une interface utilisateur permettant de définir le contenu audio intégré dans la piste audio additionnelle entrante.

L'utilisateur peut notamment ainsi définir :
- que la piste audio additionnelle entrante intègre uniquement le contenu audio additionnel, ici le contenu d'audiodescription ;
- que la piste audio additionnelle entrante intègre le contenu audio principal et le contenu audio additionnel, c'est-à-dire le contenu audio original et le contenu d'audiodescription ;
- le nombre de canaux intégrés dans la piste audio additionnelle sortante transmise au casque audio ;
- si la piste audio principale et la piste audio additionnelle sont au format mono, la voie (Gauche ou Droite) de préférence ;
- si la piste audio principale et la piste audio additionnelle sont au format stéréo, les voies multicanaux de préférence pour chaque contenu audio.

En service et quelle que soit la configuration de l'utilisateur, un contenu audio restitué par les écouteurs du casque audio présentera systématiquement un retard sur un contenu audio-vidéo restitué par la télévision. Le retard est ici introduit par un lien de communication reliant la deuxième sortie audio du boitier décodeur et le casque audio. Le retard correspond au temps de transfert d'un contenu audio du boitier décodeur au casque audio Le retard est ici propre au casque audio.

Le boitier décodeur selon l'invention est agencé pour compenser le retard introduit par le lien de communication.

Le retard peut être connu par l'utilisateur via un menu de réglage ou encore via une base de données indiquant, en fonction d'une référence d'un casque audio donné, le retard associé. Le retard pourrait encore être directement déterminé en captant le contenu audio restitué par le casque audio via des microphones internes au boitier décodeur (en rapprochant ledit casque audio du boitier décodeur).

En outre, dans le cas où le boitier décodeur comporte une pluralité de deuxièmes sorties audio agencées chacune pour être connectées à un casque audio distinct (par exemple plusieurs casque audio *Bluetooth* (marque déposée)), le retard est déterminé sur la base du lien de communication le plus lent.

Le boitier décodeur selon l'invention est donc particulièrement avantageux car il comporte une chaine de traitement audio additionnelle, distincte de la chaine de traitement vidéo et de la chaine de traitement audio principale, pour transmettre la piste audio additionnelle sortante à des écouteurs (qui est un équipement distinct du module de restitution audio-vidéo). Un spectateur sans déficience visuelle peut donc visionner un programme sur l'équipement de restitution vidéo en écoutant la piste audio principale sortante restituée par le module de restitution audio. En même temps, un spectateur ayant une déficience visuelle peut visionner le même programme sur l'équipement de restitution vidéo en écoutant la piste audio additionnelle restituée uniquement pour lui dans les écouteurs.

En outre, le boitier décodeur selon l'invention assure que le flux vidéo sortant, la piste audio principale sortante et la piste audio additionnelle sortante sont synchronisés.

Le boitier décodeur selon l'invention permet ainsi à un spectateur sans déficience visuelle et à un spectateur ayant une déficience visuelle de visionner le même programme de manière synchronisée sans se déranger mutuellement.

Bien entendu, l'invention n'est pas limitée aux modes de réalisation décrits mais englobe toute variante entrant dans le champ de l'invention telle que définie par les revendications.

Le boitier décodeur selon l'invention pourrait être intégré à la télévision, ou bien être situé dans un appareil offrant d'autres fonctionnalités (par exemple une console de jeux).

Il a ici été décrit que le contenu audio additionnel est un contenu d'audiodescription associé à un contenu audio original (qui est le contenu audio principal) mais cela n'est pas limitatif. Par exemple, la piste audio additionnelle pourrait comprendre des commentaires sportifs (par exemple les commentaires d'un arbitre).

Il a ici été décrit que les écouteurs sont intégrés dans un casque audio *Bluetooth* (marque déposée) mais cela n'est pas limitatif. Les écouteurs pourraient être intégrés dans un casque audio différent, par exemple un casque Wi-Fi (connecté dans un réseau avec le boitier décodeur) ou bien un casque connecté au boitier décodeur via une liaison filaire. Les écouteurs ne sont en outre pas forcément intégrés dans un casque audio mais pourraient être tout simplement des écouteurs sous forme d'oreillettes.

Il a ici été décrit que l'équipement de restitution vidéo 13, 113, 213, 313, 413, 513 est une télévision mais cela n'est pas limitatif. L'équipement de restitution vidéo 13, 113, 213, 313, 413, 513 pourrait être tout équipement agencé pour restituer un flux vidéo transmis par un boitier décodeur.

Bien évidemment, le flux audio entrant dans le boitier décodeur pourrait comporter plus d'une piste audio additionnelle entrante. Dans ce cas, le boitier décodeur pourrait comporter autant de deuxième sortie audio qu'il y a de piste audio additionnelle entrante (chaque piste audio additionnelle sortante pourrait ainsi être restituée par un des écouteurs distincts). Le boitier décodeur pourrait ainsi comporter une chaine de traitement audio additionnelle dédiée à chacune des deuxièmes sorties audio dudit boitier décodeur (c'est-à-dire une chaine de traitement audio additionnelle pour chaque piste audio additionnelle entrante du flux audio entrant). De manière différente, le boitier décodeur pourrait également comporter une unique chaine de traitement audio additionnelle commune à toutes les deuxièmes sorties audio dudit boitier décodeur.

## Revendications

1. Boitier décodeur (11, 111, 211, 311, 411, 511) comportant :
- une entrée (11A, 111A, 211A, 311A, 411A, 511A) agencée pour être connectée à une source (12, 112, 212, 312, 412, 512) produisant un flux audio-vidéo comprenant un flux audio entrant et un flux vidéo entrant, le flux audio entrant comportant une piste audio principale entrante qui est destinée à être restituée pour former un son ambiant et une piste audio additionnelle entrante, distincte de la piste audio principale entrante, qui comprend des commentaires relatifs au flux vidéo entrant, et qui est destinée à être restituée à un unique utilisateur via des écouteurs, la piste audio additionnelle entrante intégrant ainsi au moins un contenu audio additionnel qui est un contenu d'audiodescription, correspondant donc auxdits commentaires;
- une sortie vidéo (11B, 111B, 211B, 311B, 411B, 511B) agencée pour être connectée à un équipement de restitution vidéo (13), une première sortie audio agencée pour être connectée à un module de restitution audio comprenant au moins un haut-parleur, et une deuxième sortie audio (11C, 111C, 211C, 311C, 411C, 511C), distincte de la sortie vidéo et de la première sortie audio, et agencée pour être connectée aux écouteurs ;
- une chaîne de traitement vidéo (14, 114, 214, 314, 414, 514) agencée pour produire, à partir du flux vidéo entrant, un flux vidéo sortant, et pour transmettre le flux vidéo sortant à l'équipement de restitution vidéo via la sortie vidéo, la chaîne de traitement vidéo comprenant un module de décodage ;
- une chaîne de traitement audio principale (15, 115, 215, 315, 415, 515) agencée pour produire, à partir de la piste audio principale entrante, une piste audio principale sortante synchronisée avec le flux vidéo sortant, et pour transmettre la piste audio principale sortante au module de restitution audio via la première sortie audio, la chaîne de traitement audio principale comprenant successivement un module de décodage, un module de mise en forme et un module de pilotage, le module de pilotage fournissant une piste audio principale au module de restitution audio via la première sortie audio;
- une chaîne de traitement audio additionnelle (21, 121, 221, 321, 421, 521) agencée pour produire, à partir de la piste audio additionnelle entrante, une piste audio additionnelle sortante synchronisée avec le flux vidéo sortant, et pour transmettre la piste audio additionnelle sortante aux écouteurs via la deuxième sortie audio, la chaîne de traitement audio additionnelle comprenant successivement un module de décodage, un module de mise en forme et un module de pilotage, le module de décodage pouvant être commun à celui la chaîne de traitement audio principale, le module de pilotage fournissant la piste audio additionnelle sortante aux écouteurs via la deuxième sortie audio de sorte que les écouteurs restituent uniquement le contenu audio additionnel,- une horloge connectée au module de décodage de la chaîne de traitement vidéo et connectée au module de décodage de la chaîne de traitement audio principale.

2. Boitier décodeur selon la revendication 1, le module de restitution audio étant intégré dans le boitier décodeur.

3. Boitier décodeur selon la revendication 1, le module de restitution audio étant intégré dans une enceinte audio distincte du boitier décodeur.

4. Boitier décodeur selon l'une des revendications précédentes, la piste audio additionnelle entrante intégrant le contenu audio additionnel associé à un contenu audio principal intégré dans la piste audio principale.

5. Boitier décodeur selon l'une des revendications précédentes, la deuxième sortie audio étant une sortie Bluetooth.

6. Boitier décodeur selon l'une des revendications 1 à 5, la piste audio principale entrante intégrant un contenu audio principal et la piste audio additionnelle entrante intégrant le contenu audio principal et le contenu audio additionnel, la chaine de traitement audio additionnelle comportant un module d'extraction (126), positionné en aval du bloc de décodage de la chaine de traitement audio additionnelle et en amont du bloc de mise en forme de la chaine de traitement audio additionnelle, le module d'extraction recevant la piste audio principale entrante et la piste audio additionnelle entrante, et étant agencé pour soustraire ladite piste audio principale entrante à ladite piste audio additionnelle entrante de telle sorte que la piste audio additionnelle sortante intègre uniquement le contenu audio additionnel.

7. Boitier décodeur selon la revendication 6, le module d'extraction (126) mettant en œuvre un algorithme de traitement du signal utilisant un calcul de corrélation croisée entre la piste audio principale entrante et la piste audio additionnelle entrante pour synchroniser ladite piste audio principale entrante et ladite piste audio additionnelle entrante.

8. Boitier décodeur selon la revendication 6, la piste audio principale entrante et la piste audio additionnelle entrante intégrant en outre chacune une information d'horodatage, le module d'extraction (126) utilisant l'information d'horodatage pour synchroniser ladite piste audio principale entrante et ladite piste audio additionnelle entrante.

9. Boitier décodeur selon l'une des revendications 1 à 5, le flux audio entrant comportant uniquement une piste audio commune entrante, la piste audio commune entrante intégrant un contenu audio principal qui est un premier canal du flux audio entrant, et le contenu audio additionnel qui est un deuxième canal du flux audio entrant, le boitier décodeur comprenant un module de sélection (227), positionné en amont de la chaine de traitement audio principale et de la chaine de traitement audio additionnelle, et agencé pour séparer le premier canal du deuxième canal, la piste audio principale sortante intègre alors le premier canal et la piste audio additionnelle sortante intègre alors le deuxième canal.

10. Boitier décodeur selon la revendication 9, le module de sélection (227) recevant une métadonnée pour identifier le premier canal et le deuxième canal du flux audio entrant.

11. Boitier selon la revendication 9, le flux audio entrant étant un flux audio stéréo, la piste audio principale entrante et la piste audio additionnelle entrante étant alors chacune une piste audio mono.

12. Boitier décodeur selon l'une des revendications précédentes comportant en outre une interface utilisateur agencée pour permettre à un utilisateur de définir un contenu audio intégré dans la piste audio additionnelle entrante.

13. Boitier décodeur selon l'une des revendications précédentes, agencé pour compenser un retard introduit par un lien de communication reliant la deuxième sortie audio et les écouteurs.

14. Boitier décodeur selon la revendication 16, comportant une pluralité de deuxièmes sorties audio agencées chacune pour être connectées à des écouteurs distincts, le retard étant déterminé sur la base du lien de communication le plus lent.

15. Système multimédia (S) comprenant un boitier décodeur selon l'une des revendications précédentes, ainsi que l'équipement de restitution vidéo, le module de restitution audio et les écouteurs.

## Patentansprüche

1. Decoderbox (11, 111, 211, 311, 411, 511), enthaltend:
- einen Eingang (11A, 111A, 211A, 311A, 411A, 511A), der dafür ausgelegt ist, mit einer Quelle (12, 112, 212, 312, 412, 512) verbunden zu werden, welche einen Audio-Videostrom erzeugt, der einen eingehenden Audiostrom und einen eingehenden Videostrom umfasst, wobei der eingehende Audiostrom enthält: eine eingehende Haupt-Audiospur, die dazu bestimmt ist, bei ihrer Wiedergabe den Bildbegleitton zu bilden, und eine sich von der eingehenden Haupt-Audiospur unterscheidende, eingehende Zusatz-Audiospur, die Kommentare zu dem eingehenden Videostrom umfasst und dazu bestimmt ist, über Kopfhörer zur Wiedergabe an nur einen Benutzer ausgegeben zu werden, wobei die eingehende Zusatz-Audiospur zumindest einen Zusatz-Audioinhalt, nämlich einen Audiodeskriptionsinhalt, enthält, der somit den erwähnten Kommentaren entspricht;
- einen Videoausgang (11B, 111B, 211B, 311B, 411B, 511B), der dafür ausgelegt ist, mit einem Videowiedergabegerät (13) verbunden zu werden, einen ersten Audioausgang, der dafür ausgelegt ist, mit einem Audiowiedergabemodul verbunden zu werden, das zumindest einen Lautsprecher umfasst, und einen zweiten Audioausgang (11C, 111C, 211C, 311C, 411C, 511C), der von dem Videoausgang und von dem ersten Audioausgang getrennt ausgebildet ist und dafür ausgelegt ist, mit dem Kopfhörer verbunden zu werden;
- eine Videobearbeitungskette (14, 114, 214, 314, 414, 514), die dafür ausgelegt ist, aus dem eingehenden Videostrom einen ausgehenden Videostrom zu erzeugen und den ausgehenden Videostrom über den Videoausgang an das Videowiedergabegerät zu übertragen, wobei die Videobearbeitungskette ein Decodiermodul umfasst;
- eine Haupt-Audiobearbeitungskette (15, 115, 215, 315, 415, 515), die dafür ausgelegt ist, aus der eingehenden Haupt-Audiospur eine mit dem ausgehenden Videostrom synchronisierte, ausgehende Haupt-Audiospur zu erzeugen und die ausgehende Haupt-Audiospur über den ersten Audioausgang an das Audiowiedergabemodul zu übertragen, wobei die Haupt-Audiobearbeitungskette aufeinanderfolgend ein Decodiermodul, ein Formatierungsmodul und ein Steuerungsmodul umfasst, wobei das Steuerungsmodul eine Haupt-Audiospur über den ersten Audioausgang an das Audiowiedergabemodul ausgibt;
- eine Zusatz-Audiobearbeitungskette (21, 121, 221, 321, 421, 521), die dafür ausgelegt ist, aus der eingehenden Zusatz-Audiospur eine mit dem ausgehenden Videostrom synchronisierte, ausgehende Zusatz-Audiospur zu erzeugen und die ausgehende Zusatz-Audiospur über den zweiten Audioausgang an den Kopfhörer zu übertragen, wobei die zusätzliche Audiobearbeitungskette aufeinanderfolgend ein Decodiermodul, ein Formatierungsmodul und ein Steuerungsmodul umfasst, wobei das Decodiermodul mit jenem der Haupt-Audiobearbeitungskette identisch sein kann, wobei das Steuerungsmodul die ausgehende Zusatz-Audiospur über den zweiten Audioausgang an den Kopfhörer ausgibt, sodass der Kopfhörer ausschließlich den Zusatz-Audioinhalt wiedergibt,
- einen Zeitgeber, der mit dem Decodiermodul der Videobearbeitungskette verbunden ist und mit dem Decodiermodul der Haupt-Audiobearbeitungskette verbunden ist.

2. Decoderbox nach Anspruch 1, wobei das Audiowiedergabemodul in die Decoderbox integriert ist.

3. Decoderbox nach Anspruch 1, wobei das Audiowiedergabemodul in eine von der Decoderbox getrennt ausgebildete Audiobox integriert ist.

4. Decoderbox nach einem der vorhergehenden Ansprüche, wobei die eingehende Zusatz-Audiospur den Zusatz-Audioinhalt integriert, der einem in die Haupt-Audiospur integrierten Haupt-Audioinhalt zugeordnet ist.

5. Decoderbox nach einem der vorhergehenden Ansprüche, wobei es sich bei dem zweiten Ausgang um einen Bluetooth-Ausgang handelt.

6. Decoderbox nach einem der Ansprüche 1 bis 5, wobei die eingehende Haupt-Audiospur einen Haupt-Audioinhalt integriert und die eingehende Zusatz-Audiospur den Haupt-Audioinhalt und den Zusatz-Audioinhalt integriert, wobei die Zusatz-Audiobearbeitungskette ein Extraktionsmodul (126) umfasst, das dem Decodierblock der Zusatz-Audiobearbeitungskette nachgeordnet und dem Formatierungsblock der Zusatz-Audiobearbeitungskette vorgeordnet positioniert ist, wobei das Extraktionsmodul die eingehende Haupt-Audiospur und die eingehende Zusatz-Audiospur empfängt und dafür ausgelegt ist, die eingehende Haupt-Audiospur von der eingehenden Zusatz-Audiospur zu subtrahieren, sodass die ausgehende Zusatz-Audiospur nur noch den Zusatz-Audioinhalt integriert.

7. Decoderbox nach Anspruch 6, wobei das Extraktionsmodul (126) einen Signalverarbeitungsalgorithmus ausführt, der eine Kreuzkorrelationsberechnung zwischen der eingehenden Haupt-Audiospur und der eingehenden Zusatz-Audiospur anwendet, um die eingehende Haupt-Audiospur und die eingehende Zusatz-Audiospur zu synchronisieren.

8. Decoderbox nach Anspruch 6, wobei die eingehende Haupt-Audiospur und die eingehende Zusatz-Audiospur außerdem jeweils eine Zeitstempel-Information integrieren, wobei das Extraktionsmodul (126) die Zeitstempel-Information dazu verwendet, die eingehende Haupt-Audiospur und die eingehende Zusatz-Audiospur zu synchronisieren.

9. Decoderbox nach einem der Ansprüche 1 bis 5, wobei der eingehende Audiostrom lediglich eine eingehende, gemeinsame Audiospur enthält, wobei die eingehende, gemeinsame Audiospur einen Haupt-Audioinhalt, der einen ersten Kanal des eingehenden Audiostroms darstellt, und den Zusatz-Audioinhalt, der einen zweiten Kanal des eingehenden Audiostroms darstellt, integriert, wobei die Decoderbox ein Auswahlmodul (227) umfasst, das der Haupt-Audiobearbeitungskette und der Zusatz-Audiobearbeitungskette vorgeordnet positioniert ist und dafür ausgelegt ist, den ersten Kanal von dem zweiten Kanal zu trennen, wobei demnach die ausgehende Haupt-Audiospur den ersten Kanal integriert und die ausgehende Zusatz-Audiospur den zweiten Kanal integriert.

10. Decoderbox nach Anspruch 9, wobei das Auswahlmodul (227) einen Metadatenwert empfängt, um den ersten Kanal und den zweiten Kanal des eingehenden Audiostroms zu identifizieren.

11. Decoderbox nach Anspruch 9, wobei der eingehende Audiostrom einen Stereo-Audiostrom darstellt, und wobei es sich in dem Fall bei der eingehenden Haupt-Audiospur und bei der eingehenden Zusatz-Audiospur um jeweils eine Mono-Audiospur handelt.

12. Decoderbox nach einem der vorhergehenden Ansprüche, ferner enthaltend eine Benutzerschnittstelle, welche dafür ausgelegt ist, es einem Benutzer zu ermöglichen, einen in die eingehende Zusatz-Audiospur integrierten Audioinhalt zu definieren.

13. Decoderbox nach einem der vorhergehenden Ansprüche, welche dafür ausgelegt ist, eine durch eine Kommunikationsverbindung zwischen dem zweiten Audioausgang und dem Kopfhörer eingeführte Verzögerung zu kompensieren.

14. Decoderbox nach Anspruch 16, umfassend eine Mehrzahl von zweiten Audio-Ausgängen, die jeweils dafür ausgelegt sind, mit separat ausgebildeten Kopfhörern verbunden zu werden, wobei die Verzögerung auf der Basis der langsamsten Kommunikationsverbindung bestimmt wird.

15. Multimediasystem (S) umfassend eine Decoderbox nach einem der vorhergehenden Ansprüche sowie das Videowiedergabegerät, das Audiowiedergabemodul und den Kopfhörer.

## Claims

1. Decoder box (11, 111, 211, 311, 411, 511) comprising:
an input (11A, 111A, 211A, 311A, 411A, 511A) arranged to be connected to a source (12, 112, 212, 312, 412, 512) producing an audio-video stream comprising an inbound audio stream and an inbound video stream, the inbound audio stream comprising a main inbound audio track, which is intended to be reproduced to form an ambient sound and an additional inbound audio track, distinct from the main inbound audio track, which comprises commentaries relating to the inbound video stream, and which is intended to be reproduced to one single user via earphones, the additional inbound audio track integrates at least an additional audio content which is an audio description content corresponding to said commentaries; a video output (11B, 111B, 211B, 311B, 411B, 511B) arranged to be connected to video reproduction equipment (13), a first audio output arranged to be connected to an audio reproduction output arranged to be connected to an audio reproduction module comprising at least one speaker, and a second audio output (11C, 111C, 211C, 311C, 411C, 511C), distinct from the video output and from the first audio output, and arranged to be connected to the earphones;
a video processing chain (14, 114, 214, 314, 414, 514) arranged to produce, from the inbound video stream, an outbound video stream, and to transmit the outbound video stream to the video reproduction equipment via the video output, the video processing chain comprising a decoding module;
a main audio processing chain (15, 115, 215, 315, 415, 515) arranged to produce, from the main inbound audio track, a main outbound audio track synchronised with the outbound video stream, and to transmit the main outbound audio track to the audio reproduction module via the first audio output, the main audio processing chain comprising successively a decoding module, a shaping module and a control module, the control module providing a main audio track to the audio reproduction module via the first audio output;
an additional audio processing chain (21, 121, 221, 321, 421, 521) arranged to produce, from the additional inbound audio track, an additional outbound audio track synchronised with the outbound video stream, and to transmit the additional outbound audio track to the earphones via the second audio output, the additional audio processing chain comprising successively a decoding module, a shaping module and a control module, the decoding module being potentially common to the one of the main audio processing chain, the control module providing the additional outbound audio track to the earphones via the second audio output so that the earphones reproduce only the additional audio content;
a clock connected to the decoding module of the video processing chain and connected to the decoding module of the main audio processing chain.

2. Decoder box according to claim 1, the audio reproduction module being integrated in the decoder box.

3. Decoder box according to claim 1, the audio reproduction module being integrated in an audio speaker distinct from the decoder box.

4. Decoder box according to one of the preceding claims, the additional inbound audio track integrating the additional audio content associated with a main audio content integrated in the main audio track.

5. Decoder box according to one of the preceding claims, the second audio output being a Bluetooth output.

6. Decoder box according to one of claims 1 to 5, the main inbound audio track integrating a main audio content and the additional inbound audio track integrating the main audio content and the additional audio content, the additional audio processing chain comprising an extraction module (126), positioned downstream from the decoding unit of the additional audio processing chain and upstream from the shaping unit of the additional audio processing chain, the extraction module receiving the main inbound audio track and the additional inbound audio track, and being arranged to circumvent said main inbound audio track to said additional inbound audio track, such that the additional outbound audio track integrates only the additional audio content.

7. Decoder box according to claim 6, the extraction module (126) implementing a signal processing algorithm using a cross-correlation calculation between the main inbound audio track and the additional inbound audio track to synchronise said main inbound audio track and said additional inbound audio track.

8. Decoder box according to claim 6, the main inbound audio track and the additional inbound audio track further each integrating timestamp information, the extraction module (126) using the timestamp information to synchronise said main inbound audio track and said additional inbound audio track.

9. Decoder box according to one of claims 1 to 5, the inbound audio stream comprising only a common inbound audio track, the common inbound audio track integrating a main audio content, which is a first channel of the inbound audio stream, and the additional audio content, which is a second channel of the inbound audio stream, the decoder box comprising a selection module (227), positioned upstream from the main audio processing chain and from the additional audio processing chain, and arranged to separate the first channel from the second channel, the main outbound audio track thus integrates the first channel and the additional outbound audio track thus integrates the second channel.

10. Decoder box according to claim 9, the selection module (227) receiving a metadatum for identifying the first channel and the second channel of the inbound audio stream.

11. Box according to claim 9, the inbound audio stream being a stereo audio stream, the main inbound audio track and the additional inbound audio track thus each being a mono audio track.

12. Decoder box according to one of the preceding claims, further comprising a user interface arranged to enable a user to define an audio content integrated in the additional inbound audio track.

13. Decoder box according to one of the preceding claims, arranged to compensate for a delay introduced by a communication link connecting the second audio output and the earphones.

14. Decoder box according to claim 16, comprising a plurality of second audio outputs, each arranged to be connected to distinct earphones, the delay being determined based on the slowest communication link.

15. Multimedia system (S) comprising a decoder box according to one of the preceding claims, as well as the video reproduction equipment, the audio reproduction module and the earphones.
